# EUROPÄISCHE PATENTSCHRIFT

(11) **EP 3 106 123 B1**
(45) Veröffentlichungstag und Bekanntmachung des Hinweises auf die Patenterteilung: **03.10.2018**
(21) Anmeldenummer: 15172598.3
(22) Anmeldetag: 17.06.2015
(51) Int. Cl.: A61C 13/15

(54) **DENTAL-LICHTHÄRTGERÄT**
DENTAL LIGHT-CURING DEVICE
DISPOSITIF DENTAIRE DE DURCISSEMENT À LA LUMIÈRE

(43) Veröffentlichungstag der Anmeldung: 21.12.2016
(73) Patentinhaber: Ivoclar Vivadent AG, 9494 Schaan (LI)
(72) Erfinder: Senn, Bruno, 9056 Gais (CH); Tommasini, Dario, 7302 Mastrils (CH)
(74) Vertreter: Baronetzky, Klaus

(56) Entgegenhaltungen:
- EP-A1- 2 829 252
- WO-A1-2009/052016

## Beschreibung

Die Erfindung betrifft ein für zu härtendes Dentalmaterial vorgesehenes Dental-Lichthärtgerät, gemäß dem Oberbegriff von Anspruch 1, sowie ein System aus einem derartigen Dental-Lichthärtgerät und einer Klebekrone oder einer Klebebrücke.

Dentale Kronen werden häufig auf Zahnstümpfen aufgeklebt, indem entweder der Zahnstumpf oder die Krone oder beide mit einen hiefür geeigneten Adhäsiv versehen und dann aufeinandergedrückt werden. Für die Haltbarkeit der Klebeverbindung ist es wesentlich, dass die Klebeflächen vollflächig mit dem Adhäsiv versehen sind. Hierzu ist seit langem bekannt, einen Überschuss an Adhäsiv bereitzustellen und dann die zu verklebenden Teile gegeneinander zu drücken, so dass der Überschuss teilweise seitlich herausquillt und jedenfalls eine vollflächige Abdeckung gewährleistet ist.

Diese seit Jahrzehnten bekannte Maßnahme wird sowohl bei Zahnzement als auch bei anderen geeigneten Adhäsiven verwendet.

Es ist stets dafür Sorge zu tragen, dass die Haftung sowohl auf der Oberfläche des betreffenden Zahnes als auch auf der gegenüberliegenden Oberfläche der Dentalrestauration die erforderliche Qualität aufweist. Typischerweise wird hierbei mindestens die Zahnoberfläche angeätzt, und es werden sogenannte Haftvermittler verwendet.

Je nach dem Material der verwendeten Dentalrestauration werden unterschiedliche Adhäsive verwendet. Insbesondere bei Komposit besteht die Tendenz zu lichthärtenden Adhäsiven. Diese quellen dann typischerweise ringsum aus dem Klebespalt hinaus, wenn die Dentalrestauration mit der vorgegebenen Kraft angedrückt wird.

Selbstverständlich muss dieser sogenannte Klebeüberschuss entfernt werden, wobei es gerade bei lichthärtenden Adhäsiven schwierig ist, den Klebeüberschuss zu entfernen, da er zum Verschmieren neigt.

Es ist insofern bereits vorgeschlagen worden, den Klebeüberschuss anzuhärten, um ihn in einen gelartigen Zustand zu bringen und einfach abziehen zu können. Die Verwendung von üblichen Lichthärtgeräten hierzu ergab bei Versuchen, dass die Überschussentfernung jedoch Schwierigkeiten bereitet; wenn das Material zu stark ausgehärtet ist, lässt es sich nur sehr aufwändig abschleifen, beziehungsweise in den Zahnzwischenräumen praktisch gar nicht, und wenn es zu wenig ausgehärtet ist, verschmiert es lediglich, wenn versucht wird, das Material zu entfernen.

Gerade die Belassung von Klebeüberschuss in mesial/distaler Richtung, also in den Zahnzwischenräumen, ist jedoch paradonthoseträchtig, da sich hier in engen und schlecht zugänglichen Innenecken leicht Ablagerungen und Bakterien sammeln können.

Die WO 2009/052016 schlägt vor, über ein einziges Bedienelement zwei verschiedene Betriebsmodi aufrufen zu können, was durch die Überwachung der Betätigung des einzigen Bedienelementes innerhalb einer festgelegten Zeitspanne erreicht werden soll. Einmalige Betätigung soll insofern einen ersten, zweimalige Betätigung einen anderen Betriebsmodus aktivieren. Diese Modi sollen bspw. unterschiedliche Lichtdosen, Bestrahlungsdauer oder verschiedene Wellenlängen umfassen können.

Die EP 2 829 252 A1 beschreibt ebenfalls ein Lichthärtgerät, welches Lichtstrahlung mit unterschiedlicher Lichtleistung abgeben können soll. Die Abgabe von Strahlung mit einer reduzierten Leistung wird dort durch die Betätigung eines gesonderten Auslöseelements erreicht.

Daher liegt der Erfindung die Aufgabe zugrunde, ein für zu härtendes Dentalmaterial vorgesehenes Lichthärtgerät gemäß dem Oberbegriff von Anspruch 1 sowie ein hierzu passendes System gemäß dem Oberbegriff von Anspruch 10 zu schaffen, das die bekannten Probleme nicht aufweist, ohne dass ein zusätzliches Dentallichthärtgerät erforderlich wäre.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass das erfindungsgemäße Steuerprogramm "Vorhärten" automatisch auslösbar ist. Dies wird erfindungsgemäß in besonderer Weise durch einen praktisch integriert realisierten und besonderen Näherungssensor sichergestellt. Wenn das Steuerprogramm einmal angewählt ist, erfasst das Lichthärtgerät bzw. dessen Steuervorrichtung die Annäherung an die Dentalrestauration mit dem Klebeüberschuss und löst das Vorhärtprogramm automatisch aus, wenn der Abstand ausreichend gering ist, um eine sichere Vorhärtung in der gewünschten Weise zu gewährleisten.

Durch die feste Zeitwahl von beispielsweise zwei Sekunden ist sichergestellt, dass der Klebewulst weder zu lang noch zu kurz angehärtet wird, so dass er stets in dem erwünschten gelartigen Zustand vorliegt und auch aus den Zahnzwischenräumen sicher entfernbar ist. Es kommt nicht zum Verschmieren, und das Erfordernis des Abschleifens entfällt vollständig.

Es wird erfindungsgemäß auch verhindert, dass Steuerprogramm "Vorhärten" vorzeitig ausgelöst wird. So lässt sich erfindungsgemäß erfassen, wenn die Lichtaustrittsfläche des Lichtleitstabs des Lichthärtgeräts in ausreichend geringem Abstand von der Zahnoberfläche ist. Hierzu werden die Unterschiede der Reflexionseigenschaften zwischen beispielsweise der Mundschleimhaut und der Dentalrestauration bzw. des Zahn ausgenutzt. Das

Lichthärtgerät emittiert zunächst Licht in einem Nebenwellenlängenbereich, beispielsweise grünes Licht. Dieses ist in einem Wellenlängenbereich, der deutlich verschieden ist, von dem Wellenbereich des Empfindlichkeitsmaximums des zu polymerisierenden Adhäsivs.

In dem Handstück des Lichthärtgeräts ist ein Sensor der Lichtquelle benachbart vorgesehen, der durch den Lichtleitstab zurückgeleitetes Licht erfasst. Wenn nun die Lichtaustrittsfläche des Lichtleitstabs sich dem Klebeüberschuss annähert, wird das Licht im Nebenwellenlängenbereich mit einer bestimmten Intensität reflektiert. Das reflektierte Licht wird vom Sensor erfasst und ein entsprechendes Steuersignal der Steuervorrichtung für die Auslösung des Steuerprogramms "Vorhärten" bereitgestellt.

Es versteht sich, dass das Polymerisationslicht dann im Hauptwellenlängenbereich emittiert wird und die Lichtquelle für die vorgegebene Vorhärtzeit, beispielsweise 1 bis 3 Sekunden, eingeschaltet wird.

Für die bessere Unterscheidung des Reflexionslicht von Umgebungslicht ist es bevorzugt, das Licht im Nebenwellenlängenbereich gepulst oder in Sinusform abzugeben. Die Erfassung in dem Sensor erfolgt dann über die Größe der erfassten Amplitude des reflektierten Lichts, so dass Umgebungslicht automatisch ausgeblendet wird.

Erfindungsgemäß ist es günstig, wenn das Steuerprogramm "Vorhärten" an allen vier Seiten beispielsweise der Krone ausgelöst wird, also beispielsweise zunächst von der distal/vestibulären Seite, dann von der distal/lingualen Seite, dann von der mesio/lingualen Seite und anschließen von der mesio/vestibulären Seite.

Die exakte Dosierung erlaubt es, den Klebeüberschuss in einem Wulst abzuziehen, was eine erhebliche Arbeitserleichterung gegenüber der bislang verwendeten problematischen Technik darstellt.

Weitere Vorteile, Einzelheiten und Merkmale ergeben sich aus der nachfolgenden Beschreibung eines Ausführungsbeispiels der Erfindung anhand der Zeichnungen:
Es zeigen:
- Fig. 1: eine schematische Ansicht eines erfindungsgemäßen Systems aus einem Lichthärtgerät und einer Dentalrestauration mit Klebeüberschuss;
- Fig. 2: eine vergrößerte Darstellung eines Details aus Fig. 1, nämlich des Klebstoffüberschusses und des vorderen Ende des Lichtleitstabs des Lichthärtgeräts und;
- Fig. 3: eine schematische Ansicht der Verteilung von LED-Lichtquellen und Sensoren am rückwärtigen Ende des Lichtleitstabs.

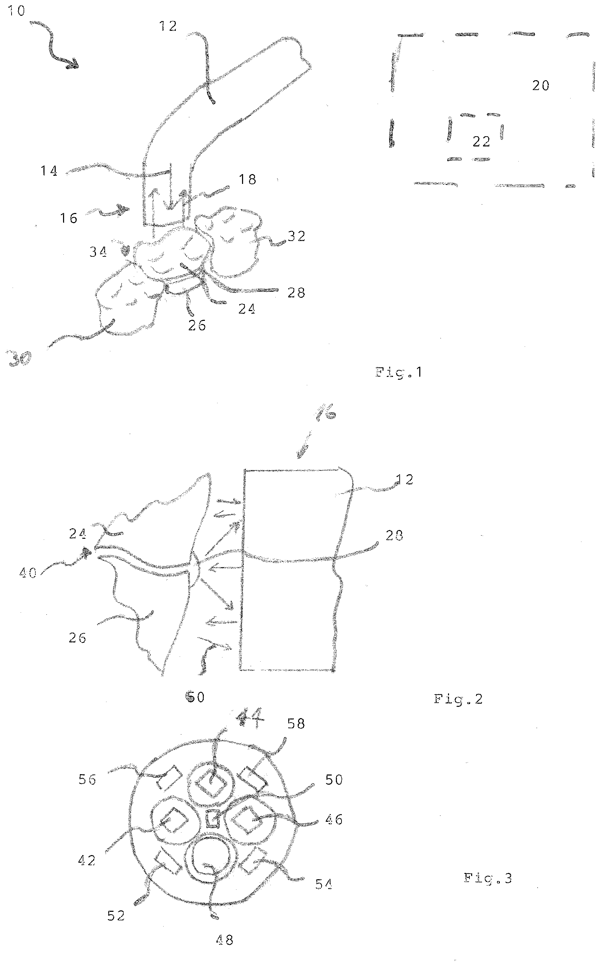

In der Ausführungsform gemäß Fig. 1 ist ein Dental-Lichthärtgerät 10 vorgesehen, von dem lediglich ein Lichtleitstab 12 als Teil eines Handstücks in Fig. 1 ersichtlich ist. Zusätzlich weist das Lichthärtgerät in an sich bekannter Weise eine Basisstation auf, mindestens einen Lagerplatz.

Am gehäusenahen Ende des Lichtleitstabs 12 ist eine Lichtquelle vorgesehen, die bevorzugt mehrere LED-Chips aufweist. Die LED-Chips leiten das Licht dem Lichtleitstab 12 zu, und es wird entsprechend dem Pfeil 14 aus einem vorderen Ende 16 des Lichtleitstabs 12 emittiert.

Etwaiges reflektiertes Licht entsprechend den Pfeilen 18 wird durch den Lichtleitstab 12 hindurchgeleitet und gelangt zu Sensoren, die im Bereich der LED-Chips angeordnet sind. Wegen der Ausgestaltung im Einzelnen sei aus Fig. 3 verwiesen.

Auch wenn hier die Erfindung unter Bezug auf einen Lichtleitstab beschrieben ist, versteht es sich, dass an Stelle dessen beliebige andere Lichtleitvorrichtungen, beispielsweise auch flexible Lichtleiter, realisierbar sind, ohne den Bereich der Erfindung zu verlassen.

Im schematisch dargestellten Handstück 20 ist eine Steuervorrichtung 22 vorgesehen, die verschiedene Steuerprogramme ausführen kann. Die Auswahl der Steuerprogramme erfolgt teils automatisch, teils aber auch über eine Wählvorrichtung, die beispielsweise als Taster an dem Handstück realisiert sein kann.

Eines der Steuerprogramme ist hier als "Vorhärten" bezeichnet und wird erfindungsgemäß eingesetzt, wie es hier näher beschrieben wird.

Das in Fig. 1 dargestellte Lichthärtgerät 10 leitet Licht einer Dentalrestauration 24 zu, die auf einem Zahnstumpf 26 aufgeklebt ist. Die Dentalrestauration ist nach Applizieren des Adhäsivs in weichem Zustand aufgedrückt, so dass ein Klebeüberschuss 28 seitlich umlaufend aus dem Klebespalt heraustritt.

Dies ist in vergrößerter Darstellung aus Fig. 2 ersichtlich.

Der Dentalrestauration 24 benachbart in mesial bzw. distaler Richtung sind Nachbarzähne 30 und 32 angeordnet, so dass die an sich bekannter Weise der Zahnzwischenraum 34 recht begrenzt ist.

Zwischen der Dentalrestauration 24 und dem Zahnstumpf 26 besteht gemäß Fig. 2 ein Klebespalt 40, dessen Breite in Fig. 2 übertrieben dargestellt ist. Der Klebeüberschuss 28 ist als eine Art Wulst seitlich des Klebespalts vorgesehen. Erfindungsgemäß wird er mit dem Ende 16 des Lichtleitstabs 12 des Lichthärtgeräts 10 mit Strahlung beaufschlagt.

Für die Erläuterung des Ablaufs wird auch auf Fig. 3 Bezug genommen.

Fig. 3 zeigt drei LED-Chips mit einem ersten Wellenlängenemissionsmaximum, beispielsweise 470nm. Ein weiterer LED-Chip 48 emittiert mit einem Emissionsmaximum von 410nm. Dieser Bereich und der diesen umgebende Bereich stellt den Hauptwellenlängenbereich dar. Zusätzlich ist erfindungsgemäß ein LED-Chip 50 für einen Nebenwellenlängenbereich aus Fig. 3 vorgesehen, das in der Ausführungsform gemäß Fig. 3 zentral angeordnet ist. Beispielsweise kann grünes Licht in diesem ermittelt werden.

Die LED-Chips 42, 44, 46 umgebend sind Sensoren 52, 54, 56 und 58 vorgesehen, die die reflektierte Strahlung erfassen.

Im Betrieb wird nun zunächst der LED-Chip im Nebenwellenbereich 50 eingeschaltet. Die Steuervorrichtung 22 erfasst, wenn sich das Ende 16 gemäß Fig. 2 der Dentalrestauration 24 und damit dem Klebeüberschuss 28 annähert. Dort wird gemäß den Pfeilen 60 die emittierte Strahlung reflektiert und über den Lichtleistab 12 den Sensoren 52 bis 58 zugeleitet. Wenn dies der Fall ist, wird erfindungsgemäß die Lichtquelle in einem Hauptwellenlängenbereich, also über die Chips 42, 44, 46 und 48 eingeschaltet, und zwar beispielsweise für 2,2 Sekunden, so dass der Klebeüberschuss 28 in einen gelartigen Zustand überführt wird.

Dieses Prozedere wird von vier Raumecken aus - bezogen auf die Dentalrestauration 24 - durchgeführt, um eine gleichmäßige Gelierung des Klebeüberschusses 28 zu gewährleisten.

Hieran anschließend schaltet sich das Lichthärtgerät 10 dann automatisch ab, und es kann nun manuell der gelartige Klebeüberschuss 28 leicht entfernt werden.

Es versteht sich, dass die Art der Strahlung und auch die Dauer der Belichtung im "Vorhärtprogramm" in weiten Bereichen an die Erfordernisse anpassbar ist. Auch können während des Einschaltens des Lichthärtgeräts im Hauptwellenlängenbereich die Sensoren aktivgeschaltet verbleiben, so dass eine Kontrolle der vorgenommenen Belichtung realisierbar ist.

In einer weiteren Ausführungsform ist es vorgesehen, die Lichtquelle in dem Handstück an das vordere Ende eines Stabes zu verlagern, der dann nicht als Lichtleitstab, sondern als Spannungsversorgungs- und Kühlstab ausgebildet ist. Auch der zugehörige Sensor 30 ist dann an dem vorderen Ende des Handstücks angeordnet, und zwar neben der Lichtquelle, bevorzugt radial außerhalb dieser.

## Patentansprüche

1. Für zu härtendes Dentalmaterial vorgesehenes Dental-Lichthärtgerät (10), das ein Handstück (20) und eine Basisstation aufweist, wobei das Handstück (20) eine Lichtquelle, insbesondere mit mehreren LED-Chips (42, 44, 46 und 48); die - bezogen auf die optische Achse - nebeneinander angeordnet sind, eine Steuervorrichtung (22) für die Lichtquelle und mindestens einen Sensor aufweist, der der Lichtquelle benachbart angeordnet ist, wobei sich - wiederum bezogen auf die optische Achse - vor der Lichtquelle eine Lichtleitvorrichtung, insbesondere ein Lichtleitstab (12), erstreckt, der einen Durchlassbereich für Wellenlängen aufweist, der mindestens blaues sichtbares Licht umfasst und insbesondere auch grünes sichtbares Licht und UV-Licht, und mit einer Wählvorrichtung für Steuerprogramme der Steuervorrichtung (22), insbesondere einem Taster an dem Handstück (20), wobei die Steuervorrichtung (22) auch ein Steuerprogramm "Vorhärten" aufweist, das mit der Wählvorrichtung anwählbar ist und in welchem das Lichthärtgerät mit einem Nebenwellenlängenbereich einschaltbar ist, der von einem Hauptwellenlängenbereich der Lichthärtung verschieden ist und dessen Lichtstrahlung außerhalb des Empfindlichkeitsbereichs des zu härtenden Dentalmaterials ist, **dadurch gekennzeichnet, dass** die Steuervorrichtung (22) die Lichtquelle im Hauptwellenlängenbereich automatisch zur Vorhärtung von Klebeüberschuss (28) bei Dentalrestaurationen, insbesondere bei Klebekronen oder Klebebrücken automatisch einschaltet, wenn mindestens ein Sensor das von einer Zahnoberfläche reflektierte Licht im Nebenwellenlängenbereich erfasst.

2. Dental-Lichthärtgerät nach Anspruch 1, **dadurch gekennzeichnet, dass** die Einschaltzeit der Lichtquelle im Nebenwellenlängenbereich für das Vorhärten für die Klebstoffüberschussentfernung der aufgeklebten Krone weniger als 3 Sekunden beträgt, insbesondere 1 bis 2 Sekunden, und automatisch endet.

3. Dental-Lichthärtgerät nach Anspruch 1 oder 2, **dadurch gekennzeichnet, dass** die Lichtquelle für die Zahndetektion gepulstes Licht im Nebenwellenlängenbereich abgibt.

4. Dental-Lichthärtgerät nach einem der vorhergehenden Ansprüche, **dadurch gekennzeichnet, dass** der Nebenwellenlängenbereich im Bereicht grünen Lichts liegt, insbesondere in einem schmalbandigen Bereich mit einem Wellenlängenspektrum von etwa 10 nm im grünen Lichtspektrum.

5. Dental-Lichthärtgerät nach einem der vorhergehenden Ansprüche, **dadurch gekennzeichnet, dass** der Sensor einen spektralen Empfindlichkeitsbereich aufweist, der den Bereich zwischen 400 nm und 570 nm abdeckt und ein Empfindlichkeitsmaximum insbesondere zwischen 460 nm und 480 nm aufweist.

6. Dental-Lichthärtgerät nach einem der vorhergehenden Ansprüche, **dadurch gekennzeichnet, dass** die Steuervorrichtung (22) die Lichtquelle im Hauptwellenlängenbereich dann einschaltet, wenn die von dem Sensor gemessenen Amplituden des reflektierten Lichts einen Schwellenwert übersteigen, der durch das Verhältnis zwischen Impuls und Pause der Einschaltung der Lichtquelle mit dem Nebenwellenlängenbereich vorgegeben ist.

7. Dental-Lichthärtgerät nach einem der vorhergehenden Ansprüche, **dadurch gekennzeichnet, dass** die Lichtleitvorrichtung einen Lichtleitstab (12) aufweist, der austauschbar ist und ein Abkröpfende aufweist, und dass der Lichtleitstab (12), insbesondere zum Vorhärten von Klebstoffüberschüssen im distalen Bereich von Molaren durch einen Lichtleitstab (12) mit einem Abkröpfwinkel austauschbar ist, der deutlich mehr als 45 ° beträgt, insbesondere zwischen 60° und 80°.

8. Dental-Lichthärtgerät nach einem der vorhergehenden Ansprüche, **dadurch gekennzeichnet, dass** die Lichtquelle mehrere LED-Chips (42, 44, 46 und 48) aufweist, die symmetrisch zueinander auf einer Ebene angebracht sind und auf einer gemeinsamen Printplatte montiert sind, wobei ein LED-Chip (50) im Nebenwellenlängenbereich und die übrigen insbesondere zwei bis zehn LED-Chips (42, 44, 46 und 48) im Hauptwellenlängenbereich emittieren.

9. Dental-Lichthärtgerät nach einem der vorhergehenden Ansprüche, **dadurch gekennzeichnet, dass** der mindestens eine Sensor unmittelbar angrenzend an einen Reflektor eines LED-Chips (42, 44, 46 und 48) der Lichtquelle angeordnet ist, insbesondere angrenzend an zwei Reflektoren zweier benachbarter LED-Chips (42, 44, 46 und 48).

10. System aus einem Dental-Lichthärtgerät (10) und einer Klebekrone oder einer Klebebrücke, mit den Merkmalen von Anspruch 1.

## Claims

1. A dental light-curing apparatus (10) for dental material to be cured, comprising a handpiece (20) and a base station, the handpiece (20) comprising a light source, In particular a plurality of LED chips (42, 44, 46 and 48) which are arranged adjacent to each other with respect to the optical axis, a control device (22) for the light source and at least one sensor, which is arranged adjacent to the light source, wherein - again with respect to the optical axis - a light guide device, in particular a light guide rod (12), extends in front of the light source, the light guide rod comprising a passband for wavelengths, which passband comprises at least blue visible light, and especially also comprises green visible light and UV light, and having a selection device for control programs of the control device (22), especially a button on the hand piece (20), wherein the control device (22) also comprises a control program "pre-curing", which is selectable by the selector device, and in which the curing apparatus can be turned on with a sub-wavelength range different from a main wavelength range of light curing and the light radiation of which is outside the sensitivity range of the dental material to be cured, **characterized in that** the control device (22) automatically turns on the light source in the main wavelength range for pre-curing excess adhesive (28) in dental restorations, especially in adhesive crowns or adhesive bridges, if at least one sensor detects the light reflected from a tooth surface In the sub-wavelength range.

2. The dental light-curing device according to claim 1, **characterized in that** the switch-on time of the light source in the sub-wavelength range for procuring for excess adhesive removal of the bonded crown is less than 3 seconds, in particular 1 to 2 seconds, and ends automatically.

3. The dental light-curing apparatus according to claim 1 or 2, **characterized in that** the light source for tooth detection emits pulsed light in the sub-wavelength range.

4. The dental light curing device according to one of the preceding Claims, **characterized in that** the sub-wavelength range is in the range of green light, in particular in a narrow-band range with a wavelength spectrum of about 10 nm in the green light spectrum.

5. The dental light curing device according to one of the preceding Claims, **characterized in that** the sensor has a spectral sensitivity range covering the range between 400 nm and 570 nm and having a maximum sensitivity, especially between 460 nm and 480 nm.

6. A dental light curing apparatus according to one of the preceding Claims, **characterized in that** the control device (22) turns on the light source in the main wavelength range when the amplitudes of the reflected light measured by the sensor exceed a threshold value which is predetermined by the ratio between pulse and pause of turning on the light source with the sub-wavelength range.

7. The dental light-curing device according to one of the preceding Claims, **characterized in that** the light-guiding device comprises a light-guiding rod (12) which is replaceable and comprises an bent end, and **In that** the light-guide rod (12), especially for pre-curing excess adhesive in the distal region of molars, is replaceable by a light-guide rod (12) having an a bent angle, which is significantly more than 45°, especially between 60° and 80°.

8. The dental light-curing device according to one of the preceding Claims, **characterized in that** the light source comprises a plurality of LED chips (42, 44, 46 and 48) which are mounted symmetrically to each another onto a plane and onto a common printed circuit board, one LED chip (50) emitting in the sub-wavelength range and the remaining two to ten LED chips (42, 44, 46 and 48) especially emitting in the main wavelength range.

9. The dental light-curing device according to one of the preceding Claims, **characterized In that** the at least one sensor Is arranged directly adjacent to a reflector of an LED chip (42, 44, 46 and 48) of the light source, especially is arranged adjacent to two reflectors of two adjacent LED chips (42, 44, 46 and 48).

10. A system comprising a dental light-curing device (10) and an adhesive crown or adhesive bridge, having the features of Claim 1.

## Revendications

1. Dispositif de photopolymérisation dentaire destiné à des matériaux dentaires (10), qui présente une pièce à main (20) et une station de base, où la pièce à main (20) dispose d'une source de lumière, en particulier ayant plusieurs puces LED (42, 44,46 et 48), qui - basée sur l'axe optique - sont disposés les unes à côté des autres, d'un dispositif de commande (22) pour la source de lumière et d'au moins un capteur, qui est disposé contigu à la source de lumière, où un dispositif de guide de lumière, en particulier un guide de lumière en forme de bâton (12), s'étend devant la source de lumière - à son tour par rapport à l'axe optique - qui présente une bande passante de longueurs d'onde qui comprend au moins la lumière bleue visible et en particulier la lumière verte visible et la lumière ultraviolette et avec un dispositif de sélection pour les programmes de commande du dispositif de commande (22), en particulier un bouton sur la pièce à main (20), où le dispositif de commande (22) présente aussi un programme de commande « prédurcissement » qui peut être sélectionné avec le dispositif de sélection et dans lequel l'appareil de photopolymérisation peut être mise en marche avec une gamme de longueurs d'onde secondaire, qui diffère d'une gamme de longueurs d'onde principale de photopolymérisation et dont l'émission de lumière se trouve à l'extérieur de la gamme de sensibilité du matériel dentaire à photopolymérlser, **caractérisé en ce que** le dispositif de commande (22) met en marche la source de lumière de manière automatique dans la longueur d'onde principale pour le prédurcissement automatique de l'excès de colle (28) des restaurations dentaires, en particulier pour les couronnes à coller ou les bridges à coller, si au moins un capteur capte la lumière réfléchie par la surface d'une dent dans la gamme de longueurs d'onde secondaire.

2. Dispositif de photopolymérisation dentaire selon la revendication 1, **caractérisé en ce que** la durée de fonctionnement de la source de lumière dans la gamme de longueur d'ondes secondaire pour le prédurcissement pour le retrait de l'excès de colle de la couronne à coller s'élève à moins de 3 secondes, en particulier de 1-2 secondes et se termine automatiquement.

3. Dispositif de photopolymérisation dentaire selon la revendication 1 ou 2, **caractérisé en ce que** la source de lumière émet une lumière pulsée dans la gamme de longueurs d'onde secondaire pour la détection de la dent.

4. Dispositif de photopolymérisation dentaire selon l'une des revendications précédentes, **caractérisé en ce que** la gamme de longueur d'ondes secondaire se trouve dans la zone de lumière verte, en particulier dans une gamme de bande étroite avec un spectre de longueur d'onde d'environ 10 nm dans le spectre de la lumière verte.

5. Dispositif de photopolymérisation dentaire selon l'une des revendications précédentes, **caractérisé en ce que** la de sensibilité le capteur possède une gamme de sensibilité spectrale qui couvre une gamme comprise entre 400 nm et couvre 570 nm et présente un maximum de sensibilité en particulier entre 460 nm et 480 nm.

6. Dispositif de photopolymérisation dentaire selon loune des revendications précédentes, **caractérisé en ce que** le dispositif de commande (22) met en marche la source de lumière dans la longueur d'onde principale, si l'amplitude de la lumière réfléchie, mesurée par le capteur, dépasse une valeur de seuil, qui est prédéterminée par le rapport entre l'impulsion et la pause de la commutation de la source de lumière avec une gamme de longueur d'onde secondaire.

7. Dispositif de photopolymérisation dentaire selon l'une des revendications précédentes, **caractérisé en ce que** le dispositif de guide de lumière présente un guide de lumière en forme de bâton (12), qui est interchangeable et présente une extrémité en coude, et que le guide de lumière en forme de bâton (12) est interchangeable par un guide de lumière en forme de bâton (12) avec un angle en coude, en particulier pour le prédurcissement de l'excès de colle dans la zone distale des molaires, qui est considérablement supérieur à 45°, en particulier entre 60° et 80°.

8. Dispositif de photopolymérisation dentaire selon l'une des revendications précédentes, **caractérisé en ce que** la source de lumière possède plusieurs puces LED (42, 44, 46 et) 48) qui sont montées de façon symétrique les uns par rapport aux autres sur un niveau et sont montés sur un circuit imprimé commun, où une puce LED (50) émet dans la gamme de longueur d'onde secondaire et les autres, en particulier deux à dix puces LED (42, 44, 46 et 48), émettent dans la gamme de longueurs d'onde principale.

9. Appareil dentaire de photopolymérisation selon l'une des revendications précédentes, **caractérisé en ce qu'**au moins un capteur est arrangé immédiatement adjacent à un réflecteur d'une puce LED (42, 44, 46 et 48) de la source de lumière, en particulier adjacente à deux réflecteurs de deux puces LED (44, 46, 42 et 48) adjacentes.

10. Système comprenant un dispositif de photopolymérisation dentaire (10) et une couronne à coller ou un bridge à coller avec les caractéristiques de la revendication 1.
